# EUROPEAN PATENT APPLICATION

(11) **EP 3 118 669 A1**
(43) Date of publication of application: **18.01.2017**
(21) Application number: 15177171.4
(22) Date of filing: 16.07.2015
(51) Int. Cl.: G02C 1/06, G02C 1/00

(54) **VERTICALLY SPLIT SPECTACLES FRONT**

(71) Applicant: Jacques Durand Occhiali S.r.l., 36075 Montecchio Maggiore (VI) (IT)
(72) Inventor: Durand, Jacques, I-36075 Montecchio Maggiore (VI) (IT)
(74) Representative: Di Bernardo, Antonio

(57) **Abstract**

The present invention relates to spectacles (1), comprising a first element (2) comprising a front part (3) provided with two rims (5a, 5b) each one having an aperture. The spectacles further comprise a second element (300) comprising at least one lens and intended to be applied to the front part (3), such that with the second element (300) in the mounted condition, the at least one lens is at one aperture of one of the two rims (5a, 5b). The front part (3) comprises a housing (8) surrounding at least one of the two rims, and the second element (300) comprises a flat portion (302) and a snap-on element (308) projecting from the flat portion (302), surrounds the at least one lens and is intended to be snapped into the housing (8) by form-fit.

## Description

### TECHNICAL FIELD

The present invention relates to the field of spectacles.

The present invention particularly relates to spectacles according to the preamble of claim 1.

### PRIOR ART

Nowadays, in the field of spectacles, there is the problem of manufacturing spectacles using different materials, for example in order to obtain special aesthetic effects or in order to reach particular desired stiffness and lightness characteristics. In particular it is known to produce the front part of spectacles using sheets of acetate cellulose, that after being shaped by a pantograph or other numerical control instruments, are glued by means of solvents or acetone-based glues.

Although it is efficient, such technique has the drawback of being able to be efficaciously applied only to materials compatible with each other, excluding the possibility of producing, for example, spectacles with front parts providing the use of both acetate and Plexiglas and/or aluminium.

Moreover such known gluing techniques are often very complicated and difficult and they require a long time for drying the used adhesives, which involves also high costs and a long time for producing the spectacles.

A further drawback of spectacles produced by gluing acetate sheets, is the fact that they can be not much sturdy, since the acetate used for producing them is an unstable material and it can get deformed during the gluing step.

### OBJECTS AND SUMMARY OF THE INVENTION

It is the object of the present invention to overcome the drawbacks of the prior art.

In particular, it is the object of the present invention to provide spectacles produced by using different materials, to be produced in a quick and efficient manner without affecting their stiffness and quality.

These and other objects of the present invention are achieved by spectacles embodying the characteristics of the annexed claims, which are an integral part of the present description.

The idea at the base of the present invention provides to produce spectacles, comprising a first element comprising a front part provided with two rims each one having an aperture. Spectacles further comprise a second element comprising at least one lens and that is intended to be applied to the front part, such that, with the removable element in the mounted condition, the at least one lens is at one aperture of one of the two rims. The front part comprises a housing surrounding at least one of the apertures of the two rims, and the second element comprises a flat portion and a snap-on element projecting from said flat portion, surrounds said at least one lens and it is intended to be snapped into the housing by form-fit.

Such solution allows the second element to be coupled to the front part it being possible to use different materials for the surfaces forming the snap-fit, therefore it being possible to select materials that further enhance the adherence in their contact and also even as regards the aesthetical point of view, to widen the customization range of spectacles as regards color matching and usable materials.

Still, such solution allows spectacles stiffness to be improved since it allows conjugate surfaces of a removable element holding the lenses to be snap coupled without moving the lenses, thus reducing the risks due to possible deformations thereof or risks of generating weak points therein due to structural stresses caused by the wrong positioning thereof.

Further advantageous characteristics of the present invention will be more clear from the following description and annexed claims, which are an integral part of the present invention.

### BRIEF DESCRIPTION OF THE DRAWINGS

The invention will be described below with reference to non limitative examples, provided by way of example and not as a limitation in the annexed drawings. These drawings show different aspects and embodiments of the present invention and, where appropriate, reference numerals showing like structures, components, materials and/or elements in different figures are denoted by like reference numerals.
Figures 1 and 2 are an overall view of the spectacles according to the invention, taken from two different perspectives.
Figures 3 and 4 are a front view and a rear view of some components of the spectacles of figure 1 and 2.
Figure 5 is an exploded view of a portion of the spectacles of figures 1 and 2.
Figure 6 is a top view of a portion of the spectacles of figures 1 and 2.

### DETAILED DESCRIPTION OF THE INVENTION

While the invention is susceptible of various modifications and alternative forms, some non limitative embodiments, provided by way of example, are described here below in details.

It should be understood, however, that there is no intention to limit the invention to the specific embodiments disclosed, but, on the contrary, the intention of the invention is to cover all modifications, alternative forms and equivalents falling within the scope of the invention as defined in the claims.

Therefore in the description below the use of "for example", "etc", "or" indicates non-exclusive alternatives without limitation unless otherwise defined; the use of "also" means "among which, but not limited to" unless otherwise defined; the use of "includes/comprises" means "includes/comprises, but not limited to," unless otherwise defined.

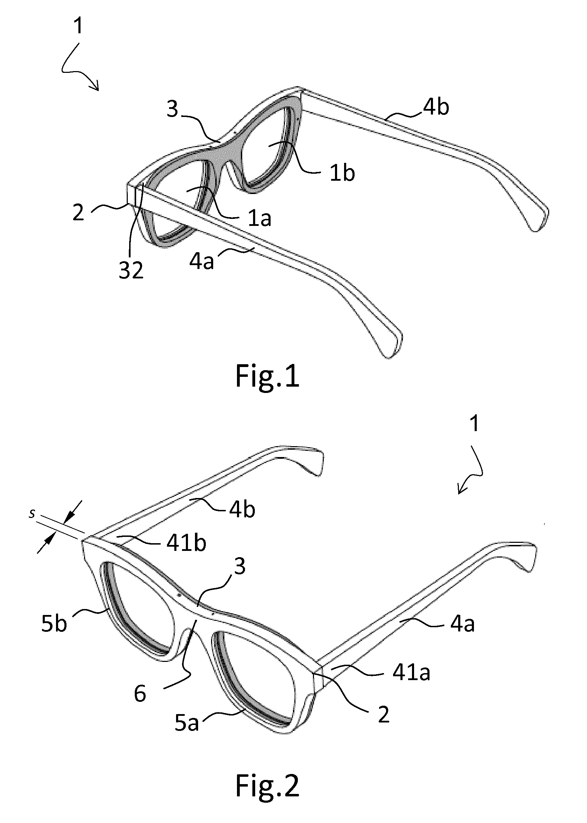

Figs. 1 and 2 show an overall view of spectacles 1 according to the invention. The spectacles 1 comprise two lenses (1a,1b) and a first element 2 - or frame - composed of a front part 3 and of two arms (4a, 4b). It is necessary to specify that the shape of the shown frame 2 is not a limitation for the description of spectacles since, the front part 3 and the arms (4a, 4b), in alternative embodiments, could be shaped with profiles different than the one shown in the figures.

The front part 3 comprises an outer surface 31 and an inner surface 32. The term "outer surface" here means the surface of the front part facing the visible horizon of the spectacles wearer and "inner surface" means, on the contrary, the surface facing the wearer's eyes.

Each one of the two arms (4a, 4b), as known, has one end (41a, 41b) fixed to the inner surface 32, through a respective hinge (not seen in the figures) that allows it to swivel from an opening position, where the arms are arranged perpendicularly to the front part, and a closing position where they are arranged substantially parallel to the front part 3.

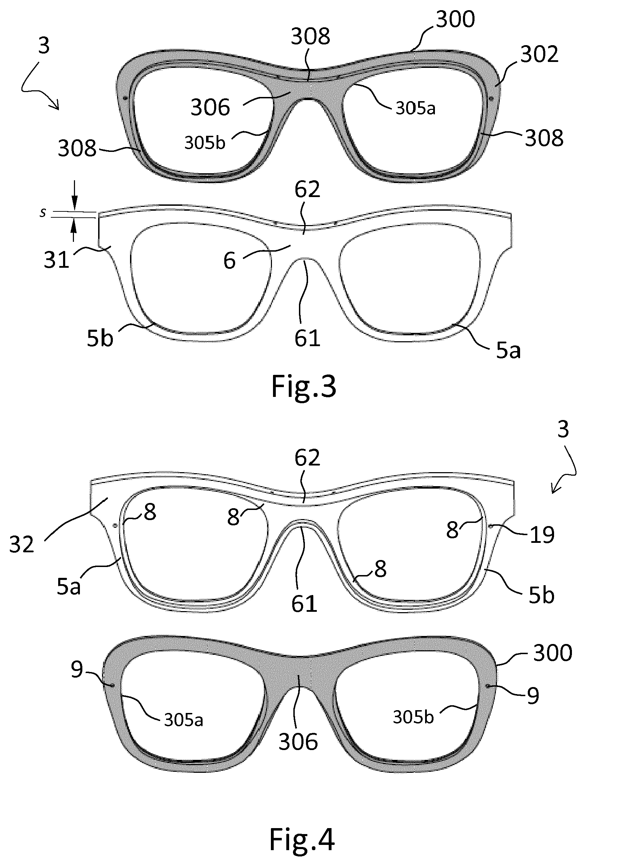

As it can be better seen in figures 3 and 4, the front part comprises two rims (5a, 5b) obtained in the thickness s of the front part 3.

The rims are connected with each other by a portion 6 of the front part 3, usually called as bridge, that has, in the lower part, a curvilinear recess 61 intended to receive the nose of the wearer of the spectacles 1 and above it has a slightly curved section 62, connecting the upper edges of the rims.

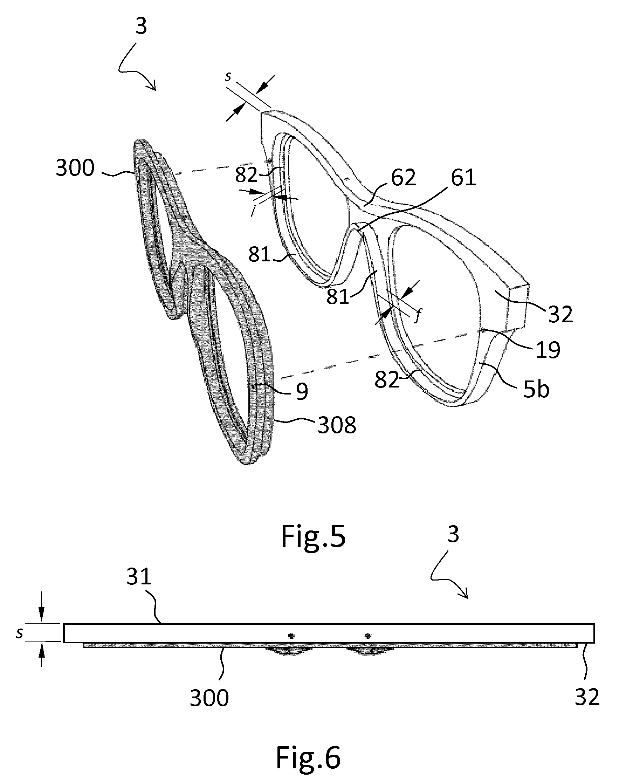

At the inner surface 32 of the rims a housing 8 is obtained, clearly shown in figs. 4 and 5. The housing 8 is a recess going from the inner surface 32 towards the outer one 31 for a depth *f* lower than the thickness s of the front part. The housing 8 has a profile that connects in a continuous manner the rims passing by the bridge 6 between the upper portion 62 and the lower portion 61 of the bridge.

Thus, with reference to figure 5, it is possible to see that the housing 8 is composed of a perimetral wall 81, comprised between the inner surface 32 and the outer surface 31, and of a base 82 surrounding the area of the rims (5a, 5b) for a width *l*. Moreover the perimetral wall is preferably oriented perpendicularly to the two surfaces (31, 32) along all its profile, but in other embodiments it can have portions with different inclinations.

Then the spectacles 1 comprise a second element 300 particularly a removable element intended to be inserted by a snap-on action in the housing 8 of the front part 3.

The removable element 300 comprises a flat portion 302 shaped with a geometry substantially superimposable to the one of the inner surface 32 of the front part 3; such removable element 300 therefore has also a bridge 306 and two rims (305a, 305b) housing the lenses 1a and 1b.

From the flat portion 302 a snap-on element 308 rises towards the outside having such a shape to be inserted by snap-on action into the housing 8, to this end the wall 308 has a profile with a path complementary to the perimetral wall 81 of the housing 8. In order to allow an efficacious snap-on action, in a preferred embodiment the perimetral wall 81 of the housing 8 has a recess and the snap-on element 308 has a corresponding projection intended to be snapped into the recess of the perimetral wall 81. As an alternative the recess can be provided on the snap-on element and the projection on the rims of the front part. In both the cases, the recess projection couple or at least one of them is made of a deformable material, preferably rubber, such to facilitate the snap-on action.

The snap-on element 308 protrudes from the flat portion 302 by a length smaller, or preferably, equal to the depth *f* of the housing 8.

Therefore the element 300 is mounted on the front part 3 by pushing the snap-on element 308 into the housing 8, to the end till abutting against the base 82 if its height is equal to the depth f of the housing 8. If the snap-on element has a height smaller than f, then its sliding into the housing 8 is stopped when the outer surface of the flat portion 302 abuts against the inner surface of the front part 3.

In both the cases, in the preferred embodiment, the flat portion 302 of the removable element adheres to the inner surface 32 of the front part 3 and the lenses present in the rims (305a, 305b) of the removable element 300 are placed inside the rims (5a, 5b) of the front part 3.

In one embodiment the removable element 300 is made of a material different than that the front piece is made of on which it is inserted. For example, the removable element can be made of Plexiglas or aluminium and the snap-on element 308 can have a surface roughness such to obtain a higher adhesion in the housing 8 of the front part 3, this latter for example made of cellulose acetate.

Moreover, with the removable element in the mounted condition, the thickness obtained by summing the thickness of the flat portion 302 with the thickness s of the front part 3 is preferably equal to or however greater than 6 mm.

In order to secure even more the removable element 300 to the front part, in the embodiment described herein there are provided removable fastening means, such as for example self-tapping screws. Such screws can pass through seats 9 provided in the flat portion 302 and penetrate into respective seats 19 in the inner surface 32 of the front part, or pass through, for example further seats placed at the thickness of the front part 3 and penetrate into the thickness of the snap-on element 308 of the removable element.

From the description above it is clear how the described spectacles allow the objects above to be achieved. The lenses are inserted in a structure, the removable element, which is snapped into the frame without the need of pressing the lenses. Therefore this allows lenses to be changed without pressing thereon (with the risk of deforming them) and without weakening the frame with movable element.

Therefore it is clear for a person skilled in the art, that it is possible to make changes and variants to the solution described with reference to the figures shown above without for this reason departing from the scope of protection of the present patent as defined in the annexed claims.

In particular, although in the example described above the removable element is equipped with two lenses and it slides by a snap-on action at the inner surface of the front part, in a variant it is possible to provide two separated removable elements, each one comprising a lens and a relevant rim, that holds it in place, and it has a profile complementary to a respective housing provided on the front part.

Still, although in the embodiment described above the housing 8 is obtained on the inner surface 32 of the front piece 3, in another embodiment the same housing can be provided on the outer surface 31 of the front part 3; in this case, the removable element 300 is inserted by a snap-on action by adhering to the outer surface of the front part.

In further variants the removable element can provide the presence of a tab preferably made as one piece therewith, shaped in such a manner to be easy to grasp also with the removable element in the mounted condition for further facilitating the release of removable element. For example such tab can be such to protrude from the straight portion of the bridge of the front part.

## Claims

1. Spectacles (1) comprising
- a first element (2) comprising a front part (3) provided with two rims (5a, 5b) each one having an aperture,
- a second element (300) comprising at least one lens and intended to be applied to said front part (3), such that with the second element (300) in the mounted condition, said at least one lens is at one of the apertures of said two rims (5a, 5b),
**characterized in that** the front part (3) comprises a housing (8) surrounding at least one aperture of said two rims,
and **in that** the second element (300) comprises a flat portion (302) and a snap-on element (308) projecting from said flat portion (302), surrounds said at least one lens and is intended to be snapped into said housing (8) by form-fit.

2. Spectacles (1) according to claim 1, wherein the second element (300) comprises two lenses and wherein the housing comprises two snap-on areas each one surrounding a respective aperture of one of said two rims (5a,5b).

3. Spectacles (1) according to claim 1, wherein the two rims (5a, 5b) of the front part are connected by a bridge having in the lower part a curved profile (61) for housing the nose of a wearer, wherein the housing (8) develops around the apertures of the two rims and along the bridge.

4. Spectacles (1) according to claim 1, wherein, with the second element (300) in the mounted condition, said flat portion (302) adheres to the front part (3).

5. Spectacles (1) according to claim 4, wherein, with the second element (300) in the condition mounted on the front part (3), the sum of the thickness of the front part (3) and of the flat portion (302) of the second element has a length equal to or preferably greater than 6 mm.

6. Spectacles (1) according to claim 1, wherein said front part (3) and said second element (300) are made of different materials, wherein the front part (3) is preferably made of cellulose acetate and the second element (300) is preferably made of a material comprised within the list comprising Plexiglas, aluminium.

7. Spectacles (1) according to claim 1, wherein the second element further comprises a grasp tab for facilitating the separation of the second element (300) from the front part.

8. Spectacles (1) according to claim 1, wherein the second element (300) is further fixed to the front part (3) by removable fastening means, wherein said removable fastening means pass through seats (9) provided on the second element (300) and penetrate into respective seats (19) provided on the front part (3).

9. Spectacles (1) according to claim 8, wherein the removable fastening means are self-tapping screws.
